# EUROPEAN PATENT SPECIFICATION

(11) **EP 4 368 016 B1**
(45) Date of publication and mention of the grant of the patent: **16.04.2025**
(21) Application number: 23207137.3
(22) Date of filing: 31.10.2023
(51) Int. Cl.: A01G 17/06

(54) **WIRE-TENSIONING ELEMENT FOR SEPARATELY CONTROLLING THE TENSION OF TWO WIRES**
NDRAHTSPANNELEMENT ZUM GETRENNTEN REGELN DER SPANNUNG VON ZWEI DRÄHTEN
ÉLÉMENT DE TENSION DE FIL POUR CONTRÔLER SÉPARÉMENT LA TENSION DE DEUX FILS

(30) Priority: 11.11.2022 IT 202200023298
(43) Date of publication of application: 15.05.2024
(73) Proprietor: Bortolussi, Franco, 33080 Fiume Veneto (PN) (IT); Bortolussi, Claudio, 33080 Fiume Veneto (PN) (IT)
(72) Inventor: Bortolussi, Franco, 33080 Fiume Veneto (PN) (IT); Bortolussi, Claudio, 33080 Fiume Veneto (PN) (IT)
(74) Representative: Giugni, Diego

(56) References cited:
- EP-A1- 2 324 700
- EP-A1- 2 933 401
- DE-A1- 3 336 574
- IT-A1- PN20 120 021
- US-A1- 2007 173 132

## Description

### FIELD OF THE INVENTION

**.** The present invention relates to an agricultural wire-tensioning element, to a device or elastic compensating element comprising said element and a system for supporting rows of plants including such wire tensioning element. In particular, the invention relates to a wire tensioning roller provided with a structure that is advantageously adapted to separately adjust the tension of two wires.

### BACKGROUND OF THE INVENTION

**.** In agriculture, and in particular in the viticulture industry, it is well known to provide support structures for plants consisting of rows of posts driven into the ground so as to form rows. The posts are spaced from each other and they are interconnected in their parts protruding from the ground by a horizontal wire, called a "load-bearing wire", which is fixed and tensioned on said posts at an appropriate height from the ground surface. Furthermore, at least one pair of wires parallel to each other and arranged on respective sides of each post of the row shall be fixed and tensioned on the two posts which are located at the ends of each row, called "head posts". These wires are commonly referred to as "containment wires" or "movable wires" given that, during the various stages of plant cultivation, they are moved to different heights from the ground to contain and organise the growing vegetation according to a desired configuration. As a matter of fact, in winter, when vine shoots are very short or are completely absent, pairs of movable wires are arranged close to the ground. In the spring and summer, when the plants produce ever more luxuriant vegetation, each pair of movable wires is placed progressively further away from the ground in the direction orthogonal to the ground, harnessing the vegetation between the wires of each pair, therefore organising the development thereof according to a desired configuration. This operation is commonly carried out to ensure an increasing exposure of the foliar surface and the fruits of the plants to the sun and wind. Furthermore, this facilitates vegetation treatment operations such as clipping, plant protection treatments and other fully conventional treatments.

**.** In particular, the tensioning of fixed or movable wires is carried out by means of tensioning elements or wire tensioners generally represented by rollers. These rollers shall consist of a rod with a cylindrical cross-section and/or at least partly solid or hollow polygonal and provided with transversal holes for engagement with one or more ends of metal wires to be tensioned. In general, when there is a pair of parallel wires to be tensioned, there are two holes positioned at the ends of the roller. Further holes are provided to allow the engagement with locking pins so as to block the rotation of the roller in the wire unwinding direction.

**.** These rollers have been used for a long time and are usually associated with a head post, as described for example in the patent application WO2007060225, or combined with elastically compensating devices, as described in patent EP1699286. Another state of the art wire tensioning device is known from EP2324700A1.

**.** Although these elements perform their function without any particular drawbacks, it has been observed that given that the two parallel wires are tensioned simultaneously by acting with a suitable tool at one end of the roller, the wires could be wound at their respective ends asymmetrically. This is due to the fact that, on the one hand, it may be difficult to set the engagement of each wire to its corresponding end of the roller in a perfectly symmetrical manner and, on the other hand, the action of the rotation tool may nevertheless tend to incline the roller with respect to its ideal transversal winding position with respect to the straight extension of the wires, even when the roller is supported by holes on a support post.

**.** Furthermore, even were the tensioning to be carried out optimally, the two wires could easily be stressed naturally or by an operator differently or by accidental impacts with the operating equipment when running the vineyard, therefore causing an asymmetrical extension/stretching with respect to the roller. This drawback results in an even significant displacement of the two wires such to lose their parallelism and/or positioning in a single horizontal plane, therefore negatively affecting the function of containment and correct support of the vegetation during the growth of the plants along the row.

### SUMMARY OF THE INVENTION

**.** Therefore, the task of the present invention is to provide a wire tensioning element or roller that avoids the aforementioned risk of misalignment of the two wires tensioned differently.

**.** In the context of the task outlined above, an object of the present invention is therefore to provide a wire tensioning element with a structure which allows to separately adjust the tension of the two wires.

**.** A further object is to provide a wire tensioning element that is easy to use for adjusting the individual tension of the wires.

**.** A further object is to provide an elastically compensating device comprising the aforementioned wire tensioning element, as well as a system for supporting rows of plants comprising the aforementioned wire tensioning element.

### BRIEF DESCRIPTION OF THE DRAWINGS

**.** The task and objects outlined above are attained by a wire tensioning element, whose body comprises two rotatably connected portions. Characteristics and advantages of the invention will be apparent from the following description, provided by way of non-limiting example, with reference to the attached drawings, wherein:
- figure 1A shows an axonometric view from a first angle of the exploded view of a wire tensioning element according to the invention;
- figure 1B shows an axonometric view from a second angle of the exploded view of a wire tensioning element according to the invention;
- figure 2 shows an assembled view of the exploded view of figure 1;
- figure 3 shows an axonometric view of an elastically compensating device for two wires, comprising the wire tensioning element of the invention;
- figure 4A shows an axonometric view of a portion of the elastically compensating device of figure 3 in a first step of engagement with two wires to be tensioned;
- figure 4B shows an axonometric view of the portion of the device in figure 4A during a step for winding a wire to be tensioned to a first portion of the wire tensioning element of the invention;
- figure 4C shows an axonometric view of the portion of the device of figure 4A during a step for winding a wire to be tensioned to a second portion of the wire tensioning element of the invention;
- figure 5 shows a schematic view of a system for fruit-bearing plants-rows comprising an elastically compensating device provided with the wire tensioning element of the invention.

### DETAILED DESCRIPTION OF THE INVENTION

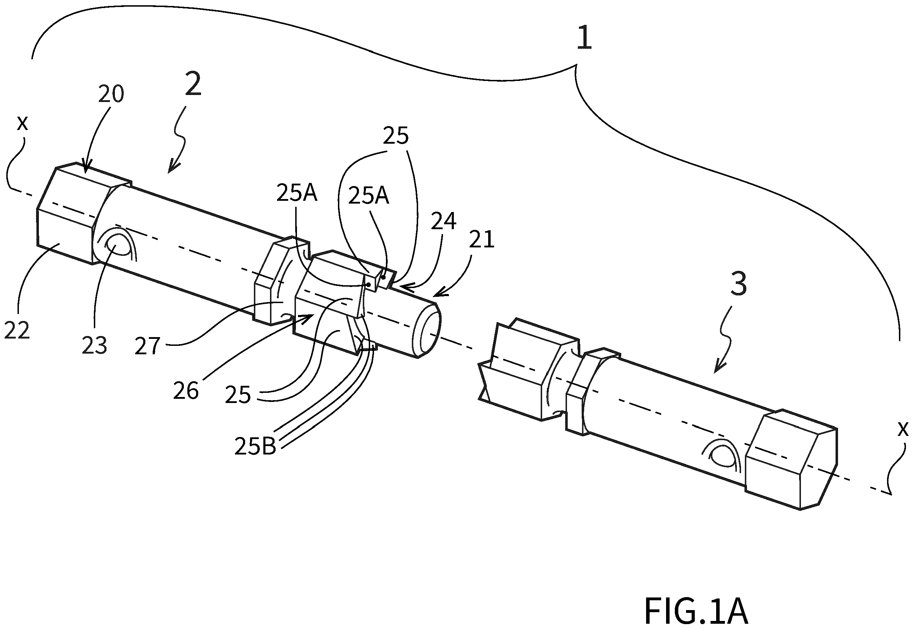

**.** Figure 1A shows a wire tensioning element 1, according to the present invention, formed by two portions, first 2 and second 3, which can be assembled together along a common rectilinear axis X-X.

**.** The first portion 2 is generally cylindrical bar-shaped comprising a first end 20 and a second end 21 opposite the first.

**.** The first end 20 is provided with means 22 for engagement with a tool (not shown) for driving the first portion in rotation around the axis X-X. Preferably, such means are a hexagonal surface which can be engaged by a corresponding hollow hexagon head tightening wrench. Alternatively, the engagement means may be a through hole which can be engaged by a rod, such as the shank of a screwdriver. Near the first end 20, in the direction of the second end 21, the first portion 2 comprises a through hole 23 for engagement with an end segment of a wire to be tensioned, as explained below.

**.** The second end 21 is a pin which extends axially and represents a first means for engagement with a complementary second engagement means obtained on the second portion 3, as described below. In particular, the pin 21 has a radial extension that is smaller than the rest of the first portion 2 so as to create a radial ring 24.

**.** Advantageously, such ring 24 shall be serrated and shaped so as to cooperate with a corresponding complementary serrated ring entirely obtained on the second portion 3, so as to allow the rotation of each of the portions, first 2 and second 3 around the axis X-X only in one direction, clockwise or counter-clockwise, this however preventing the mutual rotation in the opposite direction, counter-clockwise or clockwise. Therefore, the two serrated rings of the respective first 2 and second 3 portions of the roller 1 face for an axial engagement, as explained in greater detail below. Preferably, teeth 25 of the ring 24 are radially inclined in a single direction to form a ring in which there are alternated a shoulder 25A of a tooth and a ramp 25B of an adjacent tooth. In other words, the teeth are inclined with respect to the direction orthogonal to the axis X-X. Furthermore, the number of teeth may vary depending on particular needs or preferences. Preferably, there are six of them, they have a radial extension of 60° and a 5°-40° degree of inclination with respect to the X-X axis.

**.** Then, the radial surface 26 of the teeth 25 extends axially towards the first end 20 with a polygonal shape, preferably hexagonal, followed by an annular seat 27 for engagement with a portion of an elastically compensating device, as explained below, or with the edge of a hole of a post (not shown) for supporting a row of plants. This seat enables the roller 1 of the invention to be rotatably supported on said elastically compensating device or on said support post, when provided for.

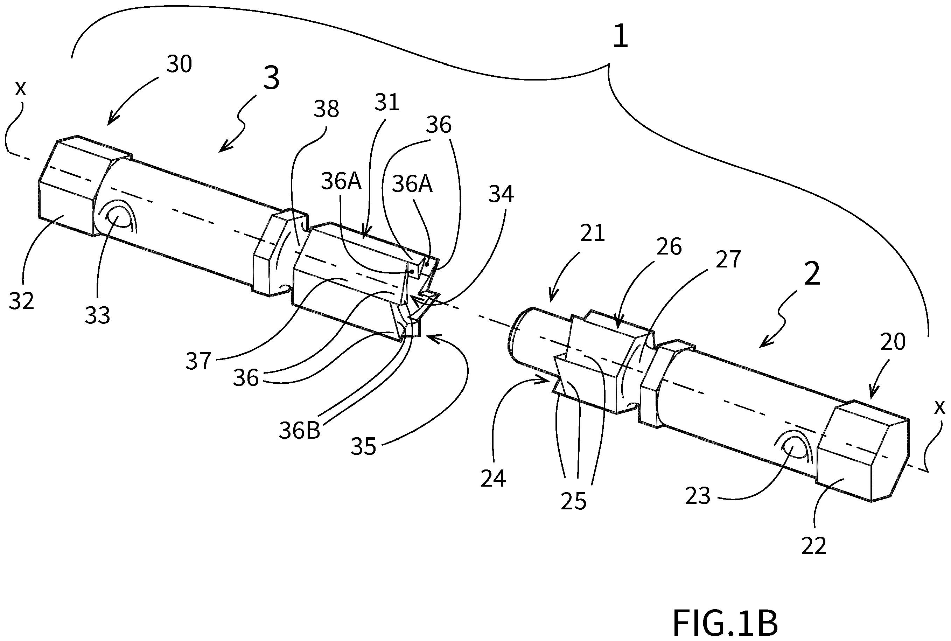

**.** The second portion 3 of the roller 1, as shown in figure 1B, has a shape generally identical to that of the first portion 2, with a first end 30 and a second end 31.

**.** The first end 30 is provided with means 32 for engagement with a tool (not shown) for driving the second portion in rotation around the axis X-X. Preferably, such means are a hexagonal surface which can be engaged by a corresponding hollow hexagon head tightening wrench. Alternatively, the means may be a through hole which can be engaged by a rod, such as the shank of a screwdriver. Near the first end 30, in the direction of the second end 31, the second portion 3 comprises a through hole 33 for engagement with an end segment of a wire to be tensioned, as explained below.

**.** The second end 31 comprises a cylindrical cavity 34 which is axially open and with a closed bottom which extends axially and represents a second means for engagement with the aforementioned first complementary engagement means represented by the pin 21 of the second end of the first portion 2. In particular, cavity 34 has a serrated annular radial edge 35 which surrounds the opening of the cavity. The teeth 36 of the annular edge are arranged in a mirror-like fashion with respect to the teeth 25 of the annular radial ring 24 of the first portion 2. Therefore, also these teeth 36, preferably are radially inclined in a single direction to form a ring in which there are alternated a shoulder 36A of a tooth and a ramp 36B of an adjacent tooth. In other words, the teeth are inclined with respect to the direction orthogonal to the axis X-X. Furthermore, the number of teeth may vary depending on particular needs or preferences. Preferably, there are six of them, they have a radial extension of 60° and a 5°-40° degree of inclination with respect to the X-X axis.

**.** Then, the radial surface 37 of the teeth 36 extends axially towards the first end 30 with a polygonal shape, preferably hexagonal, followed by an annular seat 38 for engagement with the edge of a hole of a post (not shown) for supporting a row of plants. Said seat allows the roller 1 of the invention to be rotatably supported by a support post, when provided for, also at its second portion 3 for greater stability.

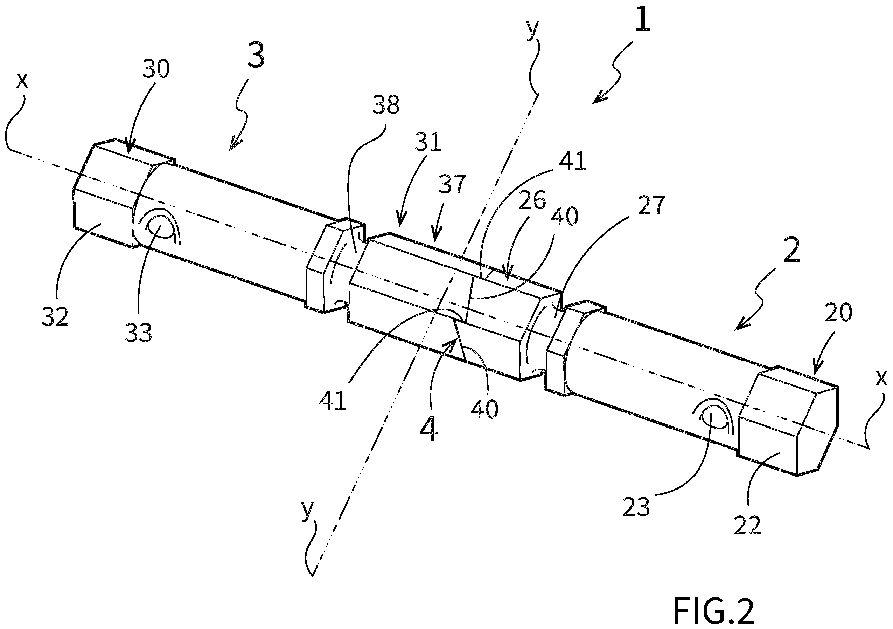

**.** As shown in figure 2, when the first 2 and second 3 portions are assembled together to form the roller 1, the outer surfaces 26, 37 respectively of teeth 25 of the first portion 2 and the teeth 36 of the second portion 3 respectively are co-planar. As a matter of fact, the two portions are assembled by inserting the pin 21 of the first portion into cavity 34 of the second portion so that the annular step 24 and the radial edge 35 come into contact with the ramps and shoulders of the respective teeth in complementary contact.

**.** In particular, it should be observed that with the aforementioned contact there is formed a zig-zag broken line 4 along the circumference of contact between said first 2 and second 3 portions. This line shows long sections 40 inclined with respect to the axis Y-Y orthogonal to the longitudinal axis X-X of the roller, interspaced by short sections 41 parallel to said longitudinal axis, the former corresponding to the inclined ramps of the teeth and the second at the shoulders. In this manner, it is clear that the gear-like engagement allows the mutual rotation of the two first 2 and second 3 portions only in one direction, but it is prevented on the other direction, as explained in detail below.

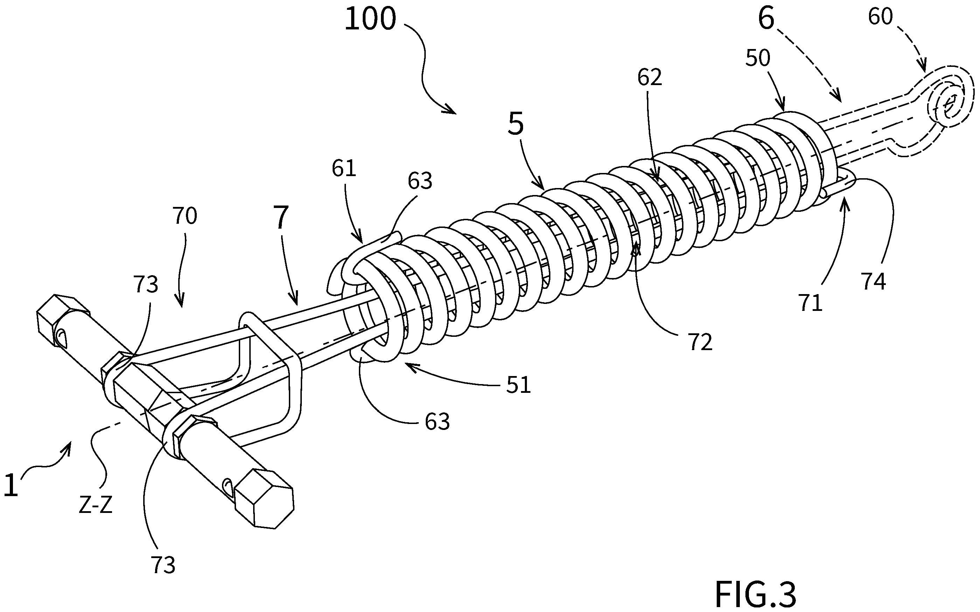

**.** According to a second object of the invention, figure 3 shows an elastically compensating device 100 or damper comprising the tensioning element 1 described above.

**.** The elastically compensating device 100 is substantially a device like the one described for example in patent EP 1699286 and it comprises an elastic element 5 which extends along a rectilinear axis Z-Z between a first 6 and a second 7 hook-like element.

**.** The elastic element 5 is preferably a compressible spring between said first 6 and second 7 hook-like elements, which extends between a first 50 and a second 51 end.

**.** The first hook-like element 6 comprises a first end 60 for fixing to a post (not shown) of a row head, a second end 61 for retaining the second end 51 of the elastic element 5 and a straight section 62 which connects said ends and it is such to be inserted into the internal space defined by said elastic element. In particular, said first hook-like element is formed by a metal wire folded to form a U shape in which the first end 60 protrudes from the first end 50 of the elastic element 5, it is closed and variously shaped to be connected directly around said post or indirectly using a collar or further connection means such as for example a chain, or using a screw transversal to the post. The second end 61 of said first hook-like element comprises two portions of wire 63 which are folded divergently so as to create two hooks for engagement with at least one turn of said second end 51 of the elastic element.

**.** The second hook-like element 7 comprises a first end 70 for supporting the wire tensioning element 1 of the invention, a second end 71 for retaining the first end 50 of the elastic element 5 and a straight section 72 between said first and second end adapted to be inserted into the internal space defined by said elastic element. In particular, said second hook-like element is formed by a metal wire folded to form a U shape in which the first end 70 forms two parallel foldings 73 each for engagement with an annular seat 27, 38 respectively of the first 2 and second 3 portion of the wire tensioning element 1. The second end 71 comprises two portions 74 (only one visible in figure 3) of a wire folded divergently so as to create two hooks for engagement with at least one turn of said first end 50 of the elastic element 5.

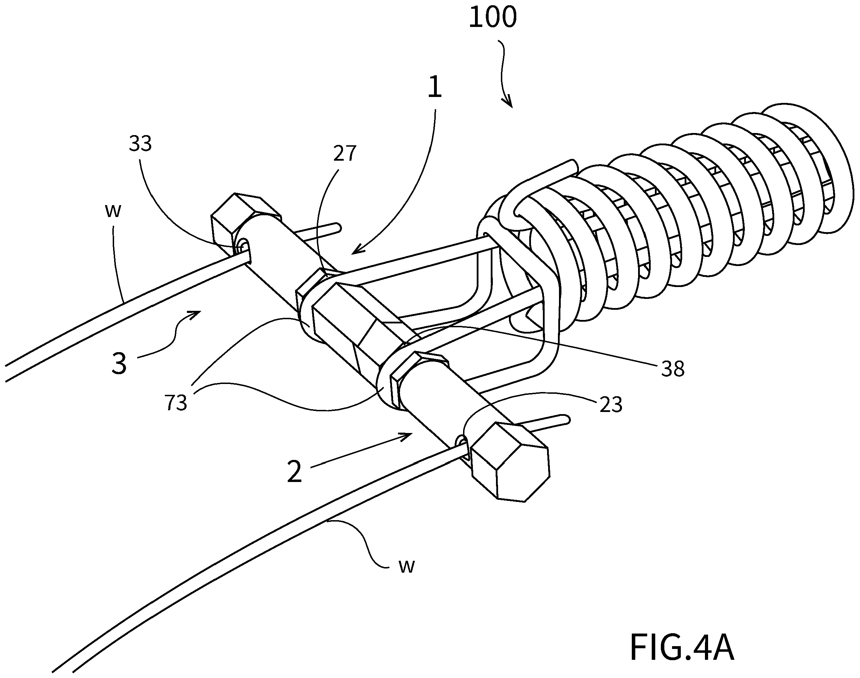

**.** With reference to the figures 4A-4C, now, described below is the operation of the wire tensioning element 1 of the present invention.

**.** First and foremost, the wire tensioning element 1 is fitted, for example, to the first end 70 for supporting the second hook-like element 7 of an elastically compensating device 100 so that the parallel foldings 73 each engage a seat 27, 38 respectively of the first portion 2 and of the second portion 3 of the wire tensioning element (figure 3).

**.** Then, as shown in the detail of figure 4A, a metal wire (and not only, for example also plastic) W is inserted into each through hole 23, 33 respectively of the first 2 and second 3 portion.

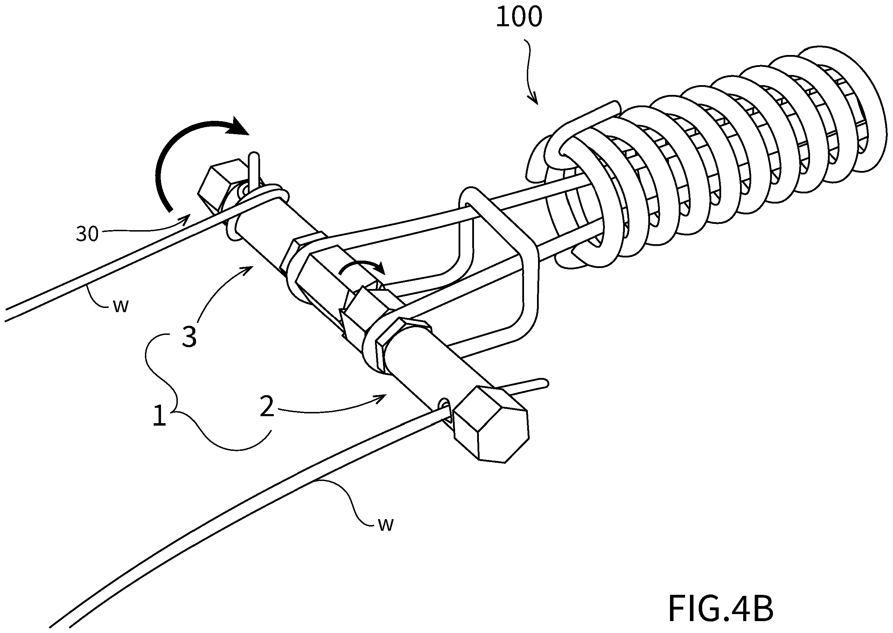

**.** At this point, one of the two portions of the wire tensioning element 1, for example the second 3 as shown in figure 4B, is driven in rotation by engaging with an appropriate tool (not shown) which acts on the first end 30 thereof. The engagement described above allows to wind the wire W on the second portion, leaving the first portion 2 still, preferably held still using a further tool which engages the first end 20 thereof, for greater safety, bringing the wire to the desired tension.

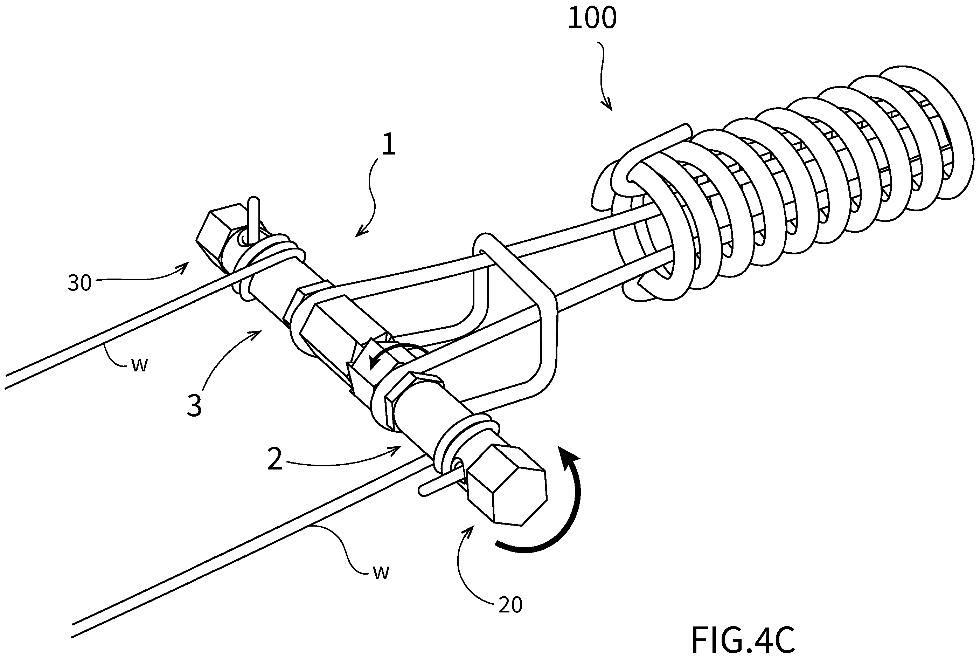

**.** Upon reaching the desired tension of the wire W on the second portion 3, the first end 20 of the first portion 2 can be adjusted to wind and therefore tension another wire W thereon (figure 4C). Obviously, in this case, thanks to the aforementioned gear-like engagement, the rotation occurs is in the opposite direction with respect to the rotation direction of the second portion 3.

**.** It should be borne in mind that during the second rotation of the first portion, a tool (not shown) must be kept engaged on the first end 30 of the second portion 3 so as to counteract the driving force which may however also involve the second portion in the unwinding direction, specifically due to the fact that the two first and second portions are in close contact.

**.** Advantageously, as shown in figures 3 and 4, the wire tensioning element 1 of the invention is mounted on the aforementioned elastically compensating device 100 so that, during the tensioning of the wires (figures 4B and 4C), the elastic element 5 is partially compressed. However, this completely conventional operation can be carried out separately for the two wires so as to adjust not only the tension individually but also as a result any asymmetries which can easily appear between the two wires W. In other words, the wire tensioning element 1 may be arranged inclined with respect to the longitudinal extension of the wires W, both on the vertical and horizontal plane. As a result, also the elastic element 5 of the elastically compensating device 100 could easily twist with greater shortening of the turns on one side with respect to the other and, therefore, negatively affect its correct functionality.

**.** The possibility to adjust the tension of the two wires W separately, allows to prevent this event from occurring.

**.** Furthermore, the wire tensioning element 1 can be mounted, for example, directly on a support post thanks to the engagement between the edges of two holes on opposite walls and the two circular seats 27 and 38 respectively of the first 2 and second 3 portion.

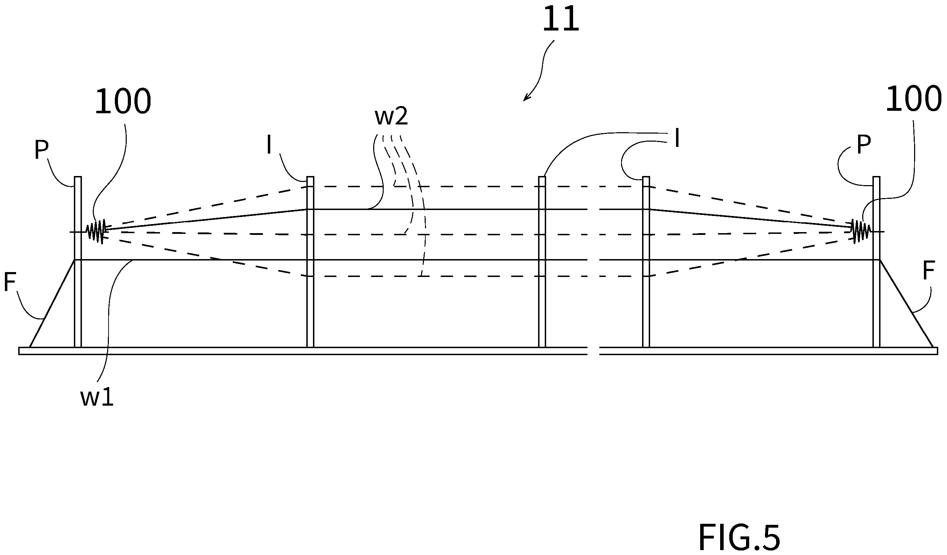

**.** According to a further object of the invention, figure 5 schematically shows a system 11 for supporting the vegetation of a fruit-bearing plants-row, preferably for a vineyard, comprising two head posts P fixed into the ground with suitable fixing means F known in the industry, such as tensioners and the respective anchors. Driven into the ground between said head posts are intermediate posts I arranged in line and evenly spaced apart from each other so as to form a row. A plurality of wires are fixed to the head posts P and they are generally divided into fixed wires W1 and movable wires W2. Both the fixed and movable wires can be tensioned using the tensioning element 1 of the present invention. As described above, the movable wires are fixed to the head posts using elastically compensating elements 100.

**.** In the light of the above, it is clear that the drawbacks noted above have been overcome while major advantages have been achieved.

**.** As a matter of fact, the tensioning element of the invention allows to adjust - in a differentiated manner - the tension of the wires so as to compensate especially the extension changes that the two wires are easily subjected to when handled from the two opposite sides of the row when handling the vegetation.

**.** The differentiated adjustment avoids or readily corrects the inclinations of the tensioning element from the optimal transverse position with respect to the rectilinear direction of the wires. As a result, also the elastically compensating element is kept straight so that it works in the best conditions.

**.** Furthermore, a further advantage of the wire tensioning element of the invention lies in the fact that the assembly thereof is significantly simplified, given that a single operator can do so without involving a second operator, as is currently the case with conventional wire tensioners and without using fasteners.

**.** Numerous variants to the wire tensioning element 1 of the invention can be adopted by the person skilled in the art, without departing from the scope of protection defined by the attached claims.

**.** For example, the outer surface may be processed differently from what is shown and described to meet specific needs or particular preferences. As a matter of fact, should one want to use a simple screwdriver to drive the two portions in rotation, there can be obtained two through holes at the second ends 22 and 32 instead of the hexagonal shape to be engaged with a corresponding wrench.

## Claims

1. Agricultural wire-tensioning element (1) comprising a first portion (2) assembled to a second portion (3) along a common rectilinear axis (X-X) in order to allow the mutual rotation around said axis, wherein said agricultural wire-tensioning element is **characterized by** the fact, that said rotation being constrained in a single direction for each portion by means of an engagement between a toothed radial ring (24) of said first portion and a mirror-like toothed radial ring (35) of said second portion, whose respective teeth (25;36) are radially inclined with respect to said axis (X-X) according to a single direction so as to form a shape coupling between the teeth of the first (2) and of the second (3) portion.

2. Element (1) according to claim 1, wherein said teeth (25;36) are formed by a shoulder (25A;36A) and a ramp (25B;36B) which are alternating with respect to each other.

3. Element (1) according to claim 1 or 2, wherein said first portion (2) comprises a first end (20) for engagement with a tool for the driving in rotation thereof and a second axial pin-shaped end (21), and wherein said second portion (3) comprises a first end (30) for engagement with a tool for the driving in rotation thereof and a second end (32) provided with an axial cavity (34) for engagement with said pin (21) of said first portion.

4. Element (1) according to claim 3, wherein said radial ring (24) of said first portion (2) is obtained at the base of said pin (21) and said radial ring (35) of said second portion (3) is obtained around the opening of said cavity (34).

5. Element (1) according to claim 3 or 4, wherein in proximity of the first ends (20;30) of each first (2) and second (3) portion a through hole (23;33) is made for engagement with a wire (W) to be tensioned.

6. Element (1) according to any one of claims 3 to 5, further comprising a circular seat (27;38) obtained in proximity of each of said second ends (21;31) respectively of said first (2) and second (3) portions.

7. Elastically compensating device (100) comprising an agricultural wire-tensioning element (1) according to any one of claims 1 to 6.

8. Agricultural post comprising an agricultural wire-tensioning element (1) according to any one of claims 1 to 6.

9. System (11) for supporting the vegetation of a fruit-bearing plants-row comprising two head posts (P) fixed into the ground by means of fixing means (F), intermediate posts (I) arranged in line and spaced apart evenly between said head posts, a plurality of fixed wires (W1) and movable wires (W2) fixed and tensioned to said head posts by means of the tensioning element (1) according to any one of claims 1 to 6.

## Patentansprüche

1. Landwirtschaftliches Draht-Spannelement (1), das einen ersten Abschnitt (2) umfasst, der an einem zweiten Abschnitt (3) entlang einer gemeinsamen geradlinigen Achse (X-X) angebracht ist, um die Drehung zueinander um die Achse herum zu ermöglichen, wobei das landwirtschaftliche Draht-Spannelement durch die Tatsache gekennzeichnet ist, dass die Drehung mittels eines Eingriffs zwischen einem radialen Zahnring (24) des ersten Abschnitts und einem spiegelbildlichen radialen Zahnring (35) des zweiten Abschnitts, deren jeweilige Zähne (25; 36) in Bezug auf die Achse (X-X) entsprechend einer einzelnen Richtung radial so geneigt sind, dass eine Form-Kopplung zwischen den Zähnen des ersten Abschnitts (2) und des zweiten Abschnitts (3) in einer einzelnen Richtung für jeden Abschnitt eingeschränkt ist.

2. Element (1) nach Anspruch 1, wobei die Zähne (25; 36) durch eine Schulter (25A; 36A) und eine Abschrägung (25B; 36B) gebildet werden, die einander abwechseln.

3. Element (1) nach Anspruch 1 oder 2, wobei der erste Abschnitt (2) ein erstes Ende (20) für Eingriff mit einem Werkzeug, mit dem es in Drehung versetzt wird, sowie ein zweites Ende (21) in Form eines axialen Stiftes umfasst und wobei der zweite Abschnitt (3) ein erstes Ende (30) für Eingriff mit einem Werkzeug, mit dem es in Drehung versetzt wird, sowie ein zweites Ende (32) umfasst, das mit einem axialen Hohlraum (34) für Eingriff mit dem Stift (21) des ersten Abschnitts versehen ist.

4. Element (1) nach Anspruch 3, wobei der radiale Ring (24) des ersten Abschnitts (2) an der Basis des Stiftes (21) vorhanden ist und der radiale Ring (35) des zweiten Abschnitts (3) um die Öffnung des Hohlraums (34) herum vorhanden ist.

5. Element (1) nach Anspruch 3 oder 4, wobei in der Nähe der ersten Enden (20; 30) des ersten Abschnitts (2) und des zweiten Abschnitts (3) jeweils ein Durchgangsloch (23; 33) für Eingriff mit einem zu spannenden Draht (W) ausgebildet ist.

6. Element (1) nach einem der Ansprüche 3 bis 5, das des Weiteren eine kreisförmige Aufnahme (27; 38) umfasst, die jeweils in der Nähe der zweiten Enden (21; 31) des ersten Abschnitts (2) bzw. des zweiten Abschnitts (3) vorhanden ist.

7. Elastische Ausgleichsvorrichtung (100), die ein landwirtschaftliches Draht-Spannelement (1) nach einem der Ansprüche 1 bis 6 umfasst.

8. Landwirtschaftlicher Pfahl, der ein landwirtschaftliches Draht-Spannelement (1) nach einem der Ansprüche 1 bis 6 umfasst.

9. System (11) zum Unterstützen des Wachstums einer Reihe fruchttragender Pflanzen, das zwei Endpfähle (P), die mit Fixiereinrichtungen (F) in dem Boden befestigt sind, Zwischenpfähle (I) die in Reihe angeordnet und zwischen den Endpfählen gleichmäßig beabstandet sind, eine Vielzahl fixierter Drähte (W1) und beweglicher Drähte (W2) umfasst, die an den Endpfählen mittels des Spannelementes (1) nach einem der Ansprüche 1 bis 6 fixiert und gespannt sind.

## Revendications

1. - Élément (1) de tension de fil agricole comprenant une première partie (2) assemblée à une seconde partie (3) le long d'un axe (X-X) rectiligne commun afin d'autoriser la rotation mutuelle autour dudit axe, ledit élément de tension de fil agricole étant **caractérisé par le fait que** ladite rotation est contrainte dans un unique sens pour chaque partie au moyen d'un engagement entre un anneau radial (24) denté de ladite première partie et un anneau radial (35) denté, en miroir, de ladite seconde partie, dont les dents (25 ; 36) respectives sont radialement inclinées par rapport audit axe (X-X) selon un unique sens de façon à former un accouplement de forme entre les dents des première (2) et seconde (3) parties.

2. - Élément (1) selon la revendication 1, dans lequel lesdites dents (25 ; 36) sont formées par un épaulement (25A ; 36A) et une rampe (25B ; 36B) qui sont alternés l'un par rapport à l'autre.

3. - Élément (1) selon la revendication 1 ou 2, dans lequel ladite première partie (2) comprend une première extrémité (20) pour un engagement avec un outil pour l'entraînement en rotation de celle-ci et une seconde extrémité axiale en forme de cheville (21), et dans lequel ladite seconde partie (3) comprend une première extrémité (30) pour un engagement avec un outil pour l'entraînement en rotation de celle-ci et une seconde extrémité (32) comportant une cavité axiale (34) pour un engagement avec ladite cheville (21) de ladite première partie.

4. - Élément (1) selon la revendication 3, dans lequel ledit anneau radial (24) de ladite première partie (2) est obtenu à la base de ladite cheville (21) et ledit anneau radial (35) de ladite seconde partie (3) est obtenu autour de l'ouverture de ladite cavité (34).

5. - Élément (1) selon la revendication 3 ou 4, dans lequel, à proximité des premières extrémités (20 ; 30) de chaque première (2) et seconde (3) parties, un trou traversant (23 ; 33) est réalisé pour un engagement avec un fil (W) à tendre.

6. - Élément (1) selon l'une quelconque des revendications 3 à 5, comprenant en outre un siège circulaire (27 ; 38) obtenu à proximité de chacune desdites secondes extrémités (21; 31) respectivement desdites première (2) et seconde (3) parties.

7. - Dispositif à compensation élastique (100) comprenant un élément (1) de tension de fil agricole selon l'une quelconque des revendications 1 à 6.

8. - Piquet agricole comprenant un élément (1) de tension de fil agricole selon l'une quelconque des revendications 1 à 6.

9. - Système (11) pour supporter la végétation d'une rangée de plantes fruitières comprenant deux piquets de tête (P) fixés dans le sol à l'aide de moyens de fixation (F), des piquets intermédiaires (I) disposés en ligne et espacés de manière régulière entre lesdits piquets de tête, une pluralité de fils fixes (W1) et de fils mobiles (W2) fixés et tendus auxdits piquets de tête à l'aide de l'élément (1) de tension selon l'une quelconque des revendications 1 à 6.
